# EUROPEAN PATENT APPLICATION

(11) **EP 4 250 715 A1**
(43) Date of publication of application: **27.09.2023**
(21) Application number: 21894576.4
(22) Date of filing: 12.11.2021
(51) Int. Cl.: H04N 5/232

(54) **IMAGE PROCESSING APPARATUS, IMAGE PROCESSING METHOD, IMAGE TRANSMITTING APPARATUS, AND IMAGE PROCESSING SYSTEM**

(30) Priority: 20.11.2020 JP 2020193742
(71) Applicant: Kyocera Corporation, Kyoto-shi Kyoto 612-8501 (JP)
(72) Inventor: HONJO Makoto, Kyoto-shi, Kyoto 612-8501 (JP)
(74) Representative: Viering, Jentschura & Partner mbB Patent- und Rechtsanwälte
(86) International application number: PCT/JP2021/041802
(87) International publication number: WO 2022/107702

(57) **Abstract**

An image processing apparatus includes a first processor. The first processor obtains a first image, which is an image of a target captured at a first time, and a second image, which is an image of the target captured, through an imaging optical system, at a second time, which precedes the first time. The first processor generates a corrected image, which is obtained by correcting, on a basis of the first image, at least a part of the second image such that the at least a part of the second image becomes close to an image obtained when the imaging optical system is in a positional relationship with the target at the first time.

## Description

### CROSS-REFERENCE TO RELATED APPLICATIONS

The present application claims priority to Japanese Patent Application No. 2020-193742 filed November 20, 2020, and the contents of this prior application is incorporated herein by reference in their entirety.

### TECHNICAL FIELD

The present disclosure relates to an image processing apparatus, a method for processing an image, an image transmission apparatus, and an image processing system.

### BACKGROUND OF INVENTION

Techniques for displaying a video shot by a camera provided for a mobile object such as a drone on a monitor of a controller for controlling the mobile object and remotely controlling the mobile object have been developed (e.g., refer to Patent Literature 1).

### CITATION LIST

### PATENT LITERATURE

Patent Literature 1: Japanese Patent No. 6675603

In an embodiment of the present disclosure, an image processing apparatus includes a first processor. The first processor obtains a first image, which is an image of a target captured at a first time, and a second image, which is an image of the target captured, through an imaging optical system, at a second time, which precedes the first time. The first processor generates a corrected image, which is obtained by correcting, on a basis of the first image, at least a part of the second image such that the at least a part of the second image becomes close to an image obtained when the imaging optical system is in a positional relationship with the target at the first time.

In another embodiment of the present disclosure, a method for processing an image includes obtaining a first image, which is an image of a target captured at a first time, and a second image, which is an image of the target captured, through an imaging optical system, at a second time, which precedes the first time. The method for processing an image further includes generating a corrected image, which is obtained by correcting, on a basis of the first image, at least a part of the second image such that the at least a part of the second image becomes close to an image obtained when the imaging optical system is in a positional relationship with the target at the first time.

In another embodiment of the present disclosure, an image transmission apparatus includes an imaging unit, a second processor, and a transmission unit. The imaging unit is configured to be capable of sequentially capturing images of a target at a certain frame rate. The second processor sequentially generates first images and second images from the images of the target captured by the imaging unit. The transmission unit transmits the first images and the second images. The first images are images obtained by reducing resolution of the second images.

In another embodiment of the present disclosure, an image processing system includes an image transmission apparatus and an image processing apparatus. The image transmission apparatus is configured to be capable of transmitting a first image, which is an image of a target captured at a first time, and a second image, which is an image of the target captured, through an imaging optical system, at a second time, which precedes the first time. The image processing apparatus includes a reception unit and a first processor. The reception unit receives the first image and the second image from the image transmission apparatus. The first processor generates a corrected image, which is obtained by correcting, on a basis of the first image, at least a part of the second image such that the at least a part of the second image becomes close to an image obtained when the imaging optical system is in a positional relationship with the target at the first time.

### BRIEF DESCRIPTION OF THE DRAWINGS

FIG. 1 is a diagram illustrating a schematic configuration of an image processing system according to an embodiment.
FIG. 2 is a diagram illustrating an example of a scene where the image processing system is employed when an image transmission apparatus is mounted on a mobile object (drone).
FIG. 3 is a schematic configuration diagram illustrating an example of the image transmission apparatus illustrated in FIG. 1.
FIG. 4 is a diagram illustrating an example of a method for adding timing information to an analog image.
FIG. 5 is a schematic configuration diagram illustrating an example of the image processing apparatus illustrated in FIG. 1.
FIG. 6 is a diagram illustrating delays until first images and second images are displayed after being captured.
FIG. 7 is a schematic configuration diagram illustrating another example of the image transmission apparatus illustrated in FIG. 1.
FIG. 8 is an exterior view illustrating an example of a mobile object corresponding to the image transmission apparatus illustrated in FIG. 7.
FIG. 9 is a schematic configuration diagram illustrating another example of the image processing apparatus corresponding to the image transmission apparatus illustrated in FIG. 7.
FIG. 10 is a diagram illustrating an example of an image captured through a second imaging optical system.
FIG. 11 is a flowchart illustrating an example of a process performed by the image transmission apparatus.
FIG. 12 is a flowchart illustrating an example of a process performed by the image processing apparatus.
FIG. 13 is a diagram illustrating an example of a first image.
FIG. 14 is a diagram illustrating an example of a second image.
FIG. 15 is a diagram illustrating an example of an image to be displayed.
FIG. 16 is a flowchart illustrating a process for compositing a missing part of the second image.
FIG. 17 is a diagram illustrating another example of the first image.
FIG. 18 is a diagram illustrating another example of the second image.
FIG. 19 is a diagram illustrating another example of the image to be displayed.
FIG. 20 is a flowchart illustrating an example of a process performed by the image processing apparatus when a dynamic object exists.
FIG. 21 is a diagram illustrating an example of a first image including a dynamic obj ect.
FIG. 22 is a diagram illustrating an example of a second image corresponding to FIG. 21.
FIG. 23 is a diagram illustrating an example of an image to be displayed corresponding to FIGs. 21 and 22.
FIG. 24 is a flowchart illustrating another example of the process performed by the image processing apparatus when a dynamic object exists.
FIG. 25 is a diagram illustrating another example of the image to be displayed corresponding to FIGs. 21 and 22.
FIG. 26 is a flowchart illustrating yet another example of the process performed by the image processing apparatus when a dynamic object exists.

### DESCRIPTION OF EMBODIMENTS

When a mobile object such as a drone is remotely controlled, quality of images transmitted to a controller for controlling the mobile object from a camera of the mobile object is preferably high in order to grasp a situation around the mobile object accurately. When the quality of images to be communicated is increased, however, delay can also increase due to a large amount of data, longer processing time for data compression and decompression, and other reasons. As the delay increases, it becomes more difficult to control a mobile object in response to real-time situation changes.

An image processing apparatus, a method for processing an image, an image transmission apparatus, and an image processing system in the present disclosure can display images of higher quality while reducing an effect of delay.

An embodiment of the present disclosure will be described hereinafter with reference to the drawings. The drawings used in the following description are schematic. Dimensional ratios and the like on the drawings do not necessarily match ones in reality.

### (Overall Configuration of Image Processing System)

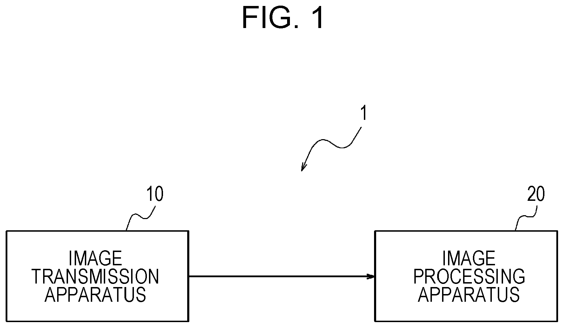

In the embodiment, an image processing system 1 includes an image transmission apparatus 10 and an image processing apparatus 20 as illustrated in FIG. 1. The image transmission apparatus 10 and the image processing apparatus 20 are communicable to each other with wired or wireless communication means. The communication means includes a method in which the image transmission apparatus 10 and the image processing apparatus 20 directly communicate with each other and a method in which the image transmission apparatus 10 and the image processing apparatus 20 indirectly communicate with each other via a base station, a relay device, and the like. The wireless communication means may be a wireless LAN such as Wi-Fi or a mobile communication system such as a 4th-generation mobile communication system (4G) or a 5th-generation mobile communication system (5G).

The image transmission apparatus 10 is configured to transmit videos of a target to the image processing apparatus 20. In the present application, a target refers to a target whose videos are to be shot. The target need not be a particular object or person but may be a whole scene including objects and persons present in an imaging direction. The target may also be called a subject. The image transmission apparatus 10 includes two systems for transmitting two videos of different qualities to the image processing apparatus 20. Quality includes elements such as resolution, the number of gradations, a frame rate, a dynamic range, and noise. The two videos are different from each other in terms of delay time, which is time taken to transmit a captured image to the image processing apparatus 20 and process the captured image after the image is captured. Delay in the present application includes processing delay due to compression and decompression, error processing, and the like at the image transmission apparatus 10 and the image processing apparatus 20 and transmission delay, which relates to transmission of a video. A first video, which is one of the videos of the two systems, has lower quality and shorter delay time than a second video, which is the other video. The second video has higher quality and longer delay time than the first video. As described hereinafter, the image processing apparatus 20 is configured to generate images of essentially higher quality and shorter delay time by correcting images included in the second video using images included in the first video.

The image transmission apparatus 10 can be mounted on a mobile object. The first video and the second video may be videos shot from the same mobile object. The mobile object may be a vehicle that travels on land, a ship that travels on water, an aircraft that flies in the sky or a flying object, a robot that performs work in locations difficult to work in, a toy modeled after one of these, or the like. The mobile object may have one of various sizes. The first video and the second video may be shot by the same camera or different cameras.

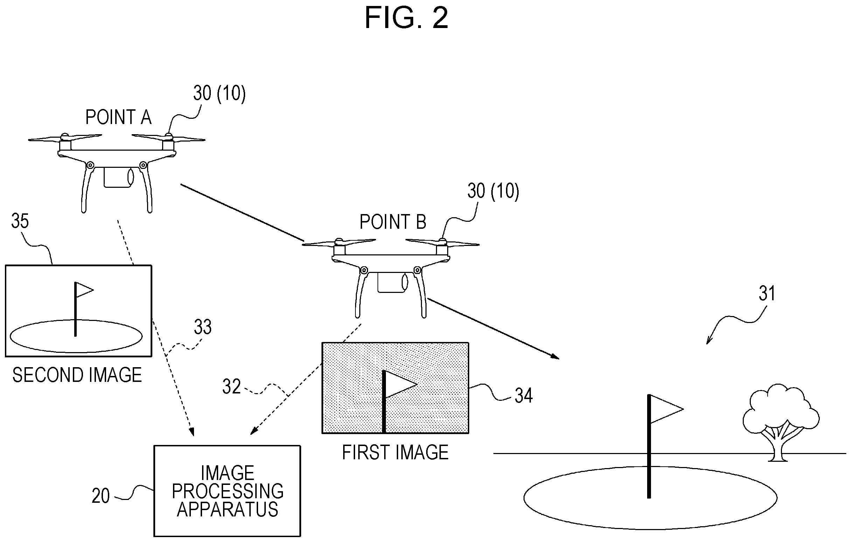

An example of the image processing system 1 in the present disclosure when the image transmission apparatus 10 is mounted on a drone, which is a mobile object 30, will be described hereinafter as an example. In FIG. 2, the mobile object 30 flies toward a target 31 while shooting a video in a direction of the target 31. The mobile object 30 sequentially passes by a point A and a point B. The image transmission apparatus 10 mounted on the mobile object 30 continuously transmits, to the image processing apparatus 20, a first video signal 32 including images of the target 31 and a second video signal 33 including images of the target 31 of higher resolution than in the first video signal. The first video signal 32 and the second video signal 33 include images captured at a certain frame rate. The certain frame rate may be set as desired. The certain frame rate may be, for example, 30 fps (frames per second) or 60 fps. The first video signal 32 and the second video signal 33 may have the same frame rate or different frame rates. For example, the frame rate of the second video signal 33 may be higher than that of the first video signal 32.

The second video signal 33, which includes images of higher resolution than in the first video signal 32, has longer delay than the first video signal 32 as described later. For this reason, the image processing apparatus 20 substantially simultaneously receives a first image 34 in the first video signal captured at the point B at a first time and a second image 35 in the second video signal captured at the point A at a second time, which precedes the first time. The image processing apparatus 20 substantially simultaneously obtains a first image 34 of lower resolution, which is a more real-time image, and a second image 35 of higher resolution than that of the first image 34, the second image 35 being captured earlier than the first image 34.

### (Example of Configuration of Image Transmission Apparatus)

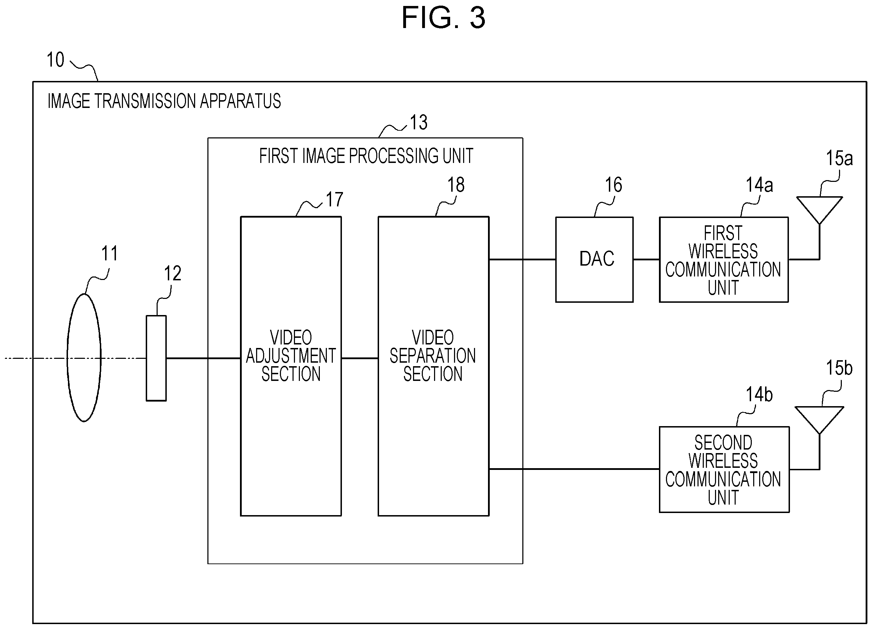

As illustrated in FIG 3, the image transmission apparatus 10 includes an imaging optical system 11, an image sensor 12, a first video processing unit 13, a first wireless communication unit 14a, a second wireless communication unit 14b, a first antenna 15a, and a second antenna 15b. The image transmission apparatus 10 may further include a DAC (digital-analog converter) 16.

The imaging optical system 11 includes one or more lenses. The imaging optical system 11 forms an image of the target 31 on a light receiving surface of the image sensor 12. The image sensor 12 may be a CCD image sensor (charge-coupled device image sensor) or a CMOS image sensor (complementary MOS image sensor). The image sensor 12 converts the image formed on the light receiving surface into an electrical signal and outputs the electrical signal to the first video processing unit 13. The imaging optical system 11 and the image sensor 12 can also be referred to as an imaging unit.

The first video processing unit 13 performs various types of processing on electrical signals output from the image sensor 12. The first video processing unit 13 includes one or more processors. The processors include a general-purpose processor that reads particular programs and executes particular functions and dedicated processors specialized in particular types of processing. The dedicated processors include an application-specific IC (integrated circuit). The processors also include a programmable logic device (PLD). The PLD includes an FPGA (field-programmable gate array). The first video processing unit 13 may employ SoC (system-on-a-chip) or SiP (system-in-a-package), where one or more processors operate together. The first video processing unit 13 corresponds to a second processor.

The first video processing unit 13 includes, for example, a video adjustment section 17 and a video separation section 18. The video adjustment section 17 adjusts, in various ways, raw data regarding videos shot by the image sensor 12. The video adjustment section 17 can perform processing, such as demosaicing, noise reduction, distortion correction, brightness adjustment, contrast adjustment, and gamma correction, on images captured by the image sensor 12. The function of the video adjustment section 17 may be incorporated into an ISP (image signal processor), which is a dedicated processor for image processing.

The video separation section 18 copies a video signal output from the video adjustment section 17 and outputs copies as the first video signal 32 and the second video signal 33. The video separation section 18 may convert, between the video signals obtained as a result of the copying, a signal output as the first video signal 32 into a signal of low resolution. The video separation section 18 may be an FPGA. The video separation section 18, however, need not necessarily be achieved by an FPGA. The video separation section 18 may be implemented on, for example, an ASIC or an SoC, instead.

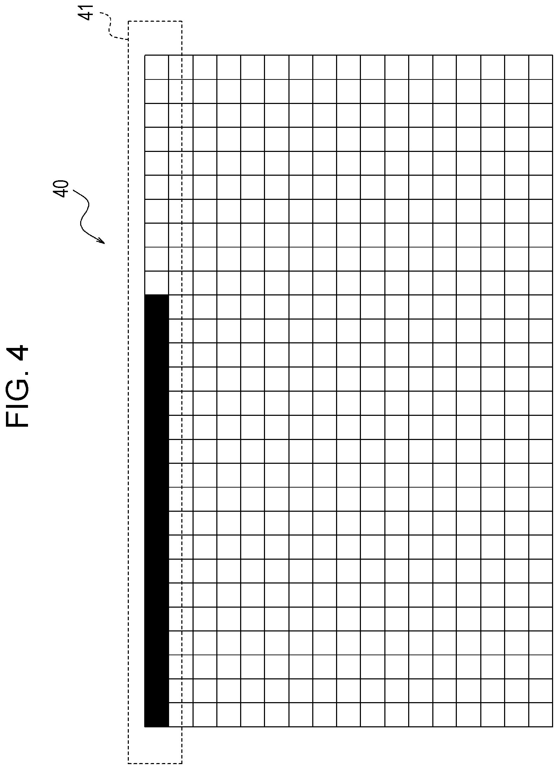

The video separation section 18 may add timing information to the first video signal 32 and the second video signal 33. The timing information is information indicating a timing at which an image of each frame was captured. The timing information may be information indicating a relative relationship between times at which images were captured. For example, the timing information may be frame numbers indicating order of capture of frames. The frame numbers may be numbers or values set as desired indicating the order of the frames. The video separation section 18 may embed, in a video signal, timing information corresponding to images of frames. In another method, the video separation section 18 may rewrite some of pixels of each of the images as information indicating the timing information. For example, the video separation section 18 may, as illustrated in FIG. 4, rewrite pixels in a top row 41 of the image of each frame as data indicating black or data indicating a pattern of some colors and assign the timing information on the basis of the length or the pattern of the data. This method may be employed especially when a video signal is converted into an analog signal and transmitted as described later.

The image transmission apparatus 10 may convert the first video signal 32 into an analog video signal and transmit the analog video signal to the image processing apparatus 20 using an analog transmission method. For this purpose, the image transmission apparatus 10 may include the DAC 16 for converting a digital first video signal 32 output from the video separation section 18 into an analog video signal. The DAC 16 may convert a digital signal in any format into an analog signal in any format. The DAC 16 may convert a digital video signal in an image format of, for example, RGB888 or YUV422 into an analog video signal in an NTSC (National Television System Committee) format or a PAL (phase alternation line) format. When the DAC 16 converts a digital video signal into an analog video signal, resolution of a video may decrease. The DAC 16 is not a mandatory component. The image transmission apparatus 10 may transmit the first video signal 32 to the image processing apparatus 20 as a digital signal obtained by decreasing resolution of the second video signal 33, instead.

The first wireless communication unit 14a modulates the first video signal 32 for wireless transmission. When the first video signal 32 is an analog signal, the first wireless communication unit 14a modulates the first video signal using an analog modulation method. The analog modulation method may be, for example, frequency modulation or phase modulation, or the like. The first wireless communication unit 14a is achieved by a communication circuit. The communication circuit includes a communication IC (integrated circuit) or an LSI (large-scale integration).

The first antenna 15a converts the first video signal 32 modulated for transmission into an electromagnetic wave and transmits the electromagnetic wave. The first wireless communication unit 14a and the first antenna 15a together form a first transmission unit.

The second wireless communication unit 14b can perform compression, transmission, and the like for transmitting the second video signal 33 to the image processing apparatus 20 as a digital video signal. In the compression, the amount of data is reduced without essentially changing content of information. A video compression method based on MPEG-2, H.264/MPEG-4 AVC (advanced video coding), H.265, or the like, for example, may be employed for the compression. The second wireless communication unit 14b may also perform encryption in addition to the compression. The transmission includes modulation. the second wireless communication unit 14b can modulate a video signal using a digital modulation method. The digital modulation method may be one of various known methods. The digital modulation method may be, for example, 16QAM (quadrature amplitude modulation), OFDM (orthogonal frequency division multiplexing), or the like.

The image transmission apparatus 10 and the image processing apparatus 20 may be directly connected to each other via a wireless video transmission apparatus employing a known digital method. The image transmission apparatus 10 and the image processing apparatus 20 may communicate with each other using a protocol such as an IP (Internet protocol) or a user datagram protocol (UDP), which are used for wireless LANs and the Internet, or the like. The second wireless communication unit 14b may perform protocol processing based on the IP, the UDP, or the like.

The second wireless communication unit 14b is achieved by a communication circuit. The function of the second wireless communication unit 14b may be incorporated into an IC, an LSI, an ASIC, an FPGA, or the like. Part of processing performed by the second wireless communication unit 14b may be performed by the same processor as that included in the first video processing unit 13.

The second antenna 15b converts the second video signal 33 modulated for transmission into an electromagnetic wave and transmits the electromagnetic wave. The second wireless communication unit 14b and the second antenna 15b together form a second transmission unit. The first transmission unit and the second transmission unit may be collectively referred to as a transmission unit.

With the above configuration, the first wireless communication unit 14a sequentially transmits the first video signal 32, which corresponds to an analog video. The second wireless communication unit 14b, on the other hand, sequentially transmits the second video signal 33, which corresponds to a digital video. Since the second video signal 33, which corresponds to a digital image, is subjected to processing such as compression, encryption, and modulation of video data, delay time taken to output the second image 35 to a display apparatus from the image processing apparatus 20 is longer than in the case of the first image 34.

### (Example of Configuration of Image Processing Apparatus)

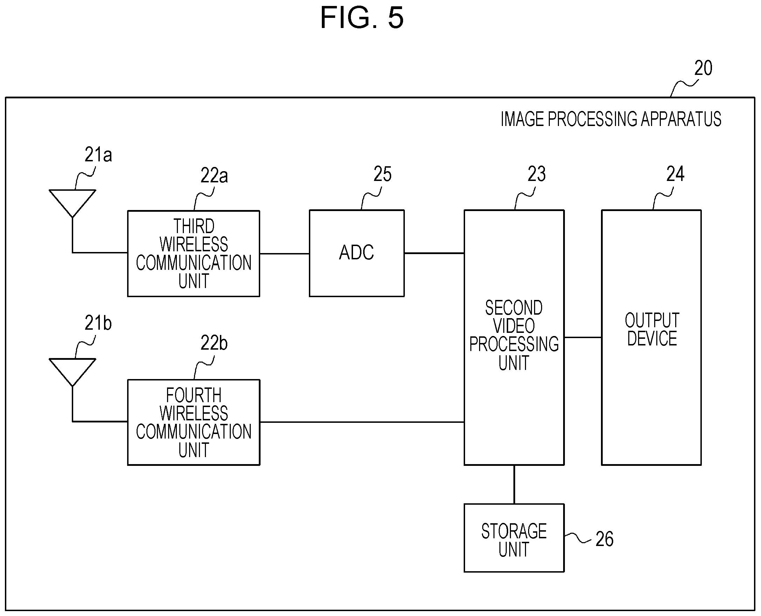

As illustrated in FIG. 5, the image processing apparatus 20 includes a third antenna 21a, a fourth antenna 21b, a third wireless communication unit 22a, a fourth wireless communication unit 22b, a second video processing unit 23, and an output device 24. When the first video is an analog video, the image processing apparatus 20 also includes an ADC (analog-digital converter) 25. The image processing apparatus 20 may also include a storage unit 26.

The third antenna 21a receives an electromagnetic wave including the first video signal 32, converts the electromagnetic wave into an electrical signal, and outputs the electrical signal to the third wireless communication unit 22a.

When the first video signal 32 is an analog signal, the third wireless communication unit 22a demodulates the signal received from the third antenna 21a to restore the analog first video signal 32. The third wireless communication unit 22a is achieved by a communication circuit. The communication circuit may be an IC, an LSI, or the like. The third antenna 21a and the third wireless communication unit 22a together form a first reception unit. The first reception unit employs an analog transmission method.

The ADC 25 converts an analog video signal into a digital video signal. The ADC 25 may convert an analog video signal in any format into a digital video signal in any format. The ADC 25 may convert, for example, an analog video in the NTSC format or the PAL format into a digital video signal in an image format of RGB888 or YUV422. The ADC 25 is configured to output the first video signal 32 converted into a digital signal to the second video processing unit 23. When the first video signal 32 received by the first reception unit is a digital signal, the ADC 25 is not necessary.

The fourth antenna 21b receives an electromagnetic wave including the second video signal 33, converts the electromagnetic wave into an electrical signal, and outputs the electrical signal to the fourth wireless communication unit 22b.

The fourth wireless communication unit 22b demodulates a signal received from the fourth antenna 21b to restore the second video signal 33, which is a digital signal. When the second video signal 33 is transmitted using a protocol such as the IP or the UDP, the fourth wireless communication unit 22b may perform protocol processing based on the IP, the UDP, or the like. The fourth wireless communication unit 22b can perform processing, such as error correction or recommunication for missing information, with the second wireless communication unit 14b. The fourth wireless communication unit 22b also decompresses the second video signal 33 compressed by the second wireless communication unit 14b. When the second video signal 33 is encrypted, the second wireless communication unit 14b may decrypt the second video signal 33. The fourth wireless communication unit 22b is achieved by a communication circuit. The function of the fourth wireless communication unit 22b may be incorporated into an IC, an LSI, an ASIC, an FPGA, or the like. Part of the processing performed by the second wireless communication unit 14b may be performed by the same processor as that included in the second video processing unit 23. The fourth antenna 21b and the fourth wireless communication unit 22b together form a second reception unit. The second reception unit employs a digital transmission method. The fourth wireless communication unit 22b is configured to output the second video signal 33 to the second video processing unit 23. The first reception unit and the second reception unit may be collectively referred to as a reception unit.

The second video processing unit 23 outputs, on the basis of the first video signal 32 and the second video signal 33, a video to be displayed. As with the first video processing unit 13, the second video processing unit 23 includes one or more processors. The second video processing unit 23 corresponds to a first processor.

The second video processing unit 23 sequentially obtains images of frames included in the first video signal 32 and the second video signal 33. The amount of data of the first video signal 32 is smaller than that of the second video signal 33. When the first video signal 32 is an analog video signal, the third wireless communication unit 22a does not perform data correction for noise, error correction for errors, or the like on the first video signal 32. For this reason, the quality of the first video signal 32 is low, but delays are short. The second video signal 33, on the other hand, causes delays longer than in the case of the first video signal 32 because of a larger amount of data for higher resolution, the compression and the decompression, the error processing and retransmission of data, and/or the like. The second video processing unit 23 can also perform various types of digital arithmetic processing on the second video signal 33. The various types of digital processing, however, can cause even longer delays. The first video signal 32, on the other hand, is received in more real-time than the second video processing unit 23. That is, the first video signal 32 has higher real-time performance than the second video signal 33. The second video signal 33 also causes variation in delay time due to internal processing of the second wireless communication unit 14b and the fourth wireless communication unit 22b, retransmission accompanying occurrence of errors in wireless transfer, and the like.

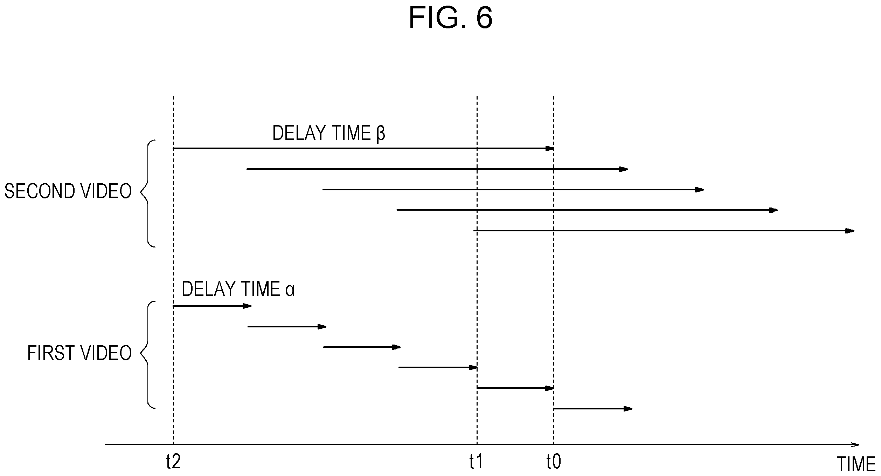

Delay time of the first video signal 32 and the second video signal 33 will be described with reference to FIG. 6. FIG. 6 illustrates time taken for an image of each of frames included in the first video signal 32 and the second video signal 33 captured at a certain time to be received by the second video processing unit 23. Delay time α is time taken for the second video processing unit 23 to obtain an image included in the first video signal 32 through the first reception unit after the image is captured. Delay time β is time taken for the second video processing unit 23 to obtain an image included in the second video signal 33 through the second reception unit after the image is captured. The delay time α is shorter than the delay time β. It is assumed, for example, that the delay time β is twice or more as long as the delay time α. The delay time β is longer than a period of time between adjacent frames of the second video signal 33.

When a present time is referred to as a present time t0, the second video processing unit 23 receives an image of a first video captured at a first time t1 the delay time α ago. The first image 34 is an image, captured at the first time t1, of one frame included in the first video signal 32. The second video processing unit 23 receives an image of a second video captured at a second time t2 the delay time β ago. The second image 35 is an image, captured at the second time t2, of one frame included in the second video signal 33. The first image 34 and the second image 35 need not be images received by the second video processing unit 23 at the present time t0. The first image 34 and the second image 35 may be, among images of frames of the first image and the second image, respectively, last images obtained by the second video processing unit 23 as of the present time t0.

The second video processing unit 23 may sequentially store, in the storage unit 26, a first image 34 and a second image 35 obtained at each point in time. The second video processing unit 23 can sequentially perform processing using the first images 34 and the second images 35 stored in the storage unit 26.

The first image 34 and the second image 35 are captured at different times. A difference between the first image 34 and the second image 35, however, is not very large since the same imaging unit captures the first image 34 and the second image 35, and the second image 35 can include a part or the entirety of the first image 34. The second video processing unit 23 can extract an area in the second image 35 corresponding to the first image 34 by matching the first image 34 and the second image 35. The corresponding area is an area where a target whose images have been captured is the same or sufficiently similar even though there is a difference in size due to the timings at which the first image 34 and the second image 35 were captured. The second image illustrated in FIG. 2, for example, shows the entirety of a flag and a pole, and the first image shows a part of the flag. In this case, an area of the part of the flag in the second image corresponding to the first image is a corresponding area. One of various known methods may be used for the matching. A method used for the matching includes area-based matching and feature-based matching. The area-based matching includes matching employing a template. The feature-based matching can be performed by extracting feature points, which are points that serve as features, and associating the feature points between images.

The second video processing unit 23 determines an image cutout range in the second image 35 on the basis of a result of the matching. The cutout range in the second image 35 is at least a part of the second image 35 corresponding to at least a part of the first image 34. The second image 35 may include a part corresponding to not a part of the first image 34 but the entirety of the first image 34. When the mobile object 30 is moving toward the target 31 as illustrated in FIG. 2, for example, the second image 35 can include an image corresponding to the entirety of the first image 34. When the mobile object 30 is moving away from the target 31 in contrast to FIG. 2, the entirety of the second image 35 can include a part of the first image 34.

The second video processing unit 23 can cut out an image inside a cutout range in the second image 35. The image inside the cutout range in the second image 35 will be referred to as a third image. The third image can also be called a cutout image. The second video processing unit 23 can generate a fourth image, which is a corrected third image through enlargement or reduction based on the size of the first image 34. The fourth image can also be called a corrected image. The fourth image is an image obtained by correcting the third image such that the third image becomes close to an image obtained when the imaging optical system 11 of the image transmission apparatus 10 is in a positional relationship with the target 31 at the first time t1.

When the first image 34 includes an area that is not included in the fourth image, the second video processing unit 23 may combine the fourth image and a part of the first image 34 that is not included in the corrected image.

Furthermore, if there is an image of an object included in the first image 34 and located at a position different from one in the fourth image, the second video processing unit 23 can recognize the object as a dynamic object. A dynamic object refers to an object that moves or behaves independently of movement of the mobile object 30 on which the image transmission apparatus 10 is mounted. A dynamic object moves over time relative to a background image. The second video processing unit 23 can perform image composition by combining the first image 34 with the fourth image such that a dynamic object is shown in the fourth image more appropriately. An image generated in this manner by compositing a part of the first image 34 with the fourth image or an image obtained by performing a certain type of processing on the fourth image will be referred to as a fifth image. The fifth image can also be called a composite image. Details of this processing will be further described later.

The second video processing unit 23 outputs the fourth image or the fifth image to the output device 24 as an image to be displayed. If the fourth image does not have a missing part compared to an imaging area of the first image 34, or if the first image 34 or the fourth image does not include a dynamic object, the fourth image is output, through processing with a relatively small load, as an image to be displayed. If the fourth image has a missing part compared to the imaging area of the first image 34, or if the first image 34 or the fourth image includes a dynamic object, the fifth image is output as an image to be displayed. The second video processing unit 23 sequentially outputs images to be displayed on the basis of sequentially obtained images of frames of the first video and the second video.

The output device 24 may be a display device that displays videos output from the second video processing unit 23. The output device 24 may be, for example, one of various display devices including a liquid crystal display (LCD), an organic EL (electroluminescence) display, an inorganic EL display, and a plasma display panel (PDP). The output device 24 may be a device that transmits, to an apparatus outside the image processing apparatus 20, images to be displayed, instead.

### (Another Example of Configuration of Image Transmission Apparatus)

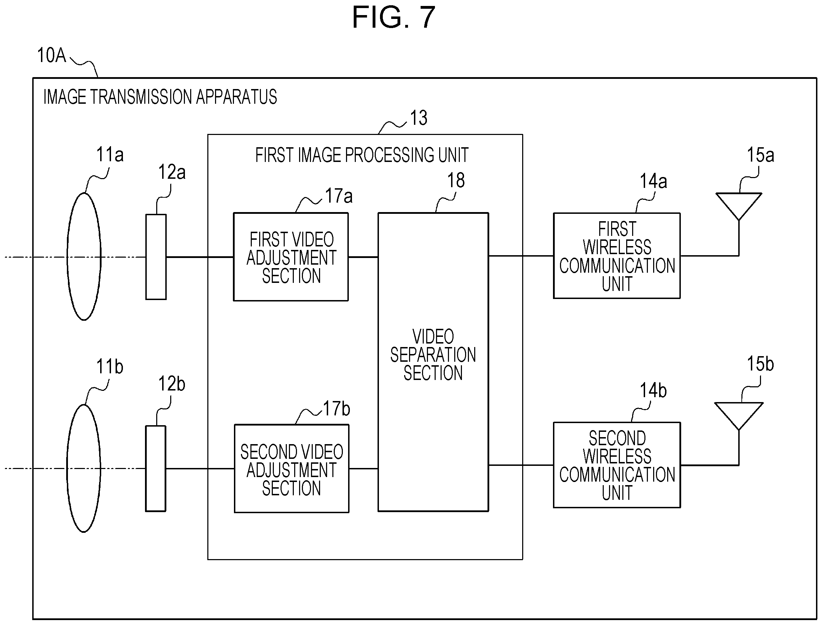

The image transmission apparatus 10 described with reference to FIG. 3 generates the first image 34 and the second image 35 by copying an image captured using the single imaging optical system 11 and the single image sensor 12. The first image 34 and the second image 35 can be captured using a plurality of different imaging optical system 11 and image sensors 12, instead. FIG. 7 illustrates an example of the configuration of such an image transmission apparatus 10A. In the following description of the image transmission apparatus 10A, parts different from the image transmission apparatus 10 illustrated in FIG. 3 will be described, and description of the same parts is partially omitted.

As illustrated in FIG. 7, the image transmission apparatus 10A includes a first imaging optical system 11a, a first image sensor 12a, a second imaging optical system 11b, and a second image sensor 12b. The image transmission apparatus 10A also includes the first video processing unit 13, the first wireless communication unit 14a, the second wireless communication unit 14b, the first antenna 15a, and the second antenna 15b. The first video processing unit 13 includes a first video adjustment section 17a, a second video adjustment section 17b, and the video separation section 18. The first imaging optical system 11a and the first image sensor 12a can also be called a first imaging unit. The second imaging optical system 11b and the second image sensor 12b can also be called a second imaging unit.

The first imaging optical system 11a and the first image sensor 12a shoot the first video. The second imaging optical system 11b and the second image sensor 12b shoot the second video. The first imaging optical system 11a and the second imaging optical system 11b may have different optical characteristics. For example, the second imaging optical system 11b may include a lens with an angle wider than that of a lens included in the first imaging optical system 11a. That is, the second imaging optical system 11b may be capable of forming a video with a field of view wider than that of a video formed by the first imaging optical system 11a. The first image sensor 12a and the second image sensor 12b may also be different from each other. For example, the second image sensor 12b may be an image sensor whose number of pixels is larger and whose pixel density is higher than those of the first image sensor 12a. In this case, the resolution of the second image 35 included in the second video can be higher than that of the first image 34 included in the first video.

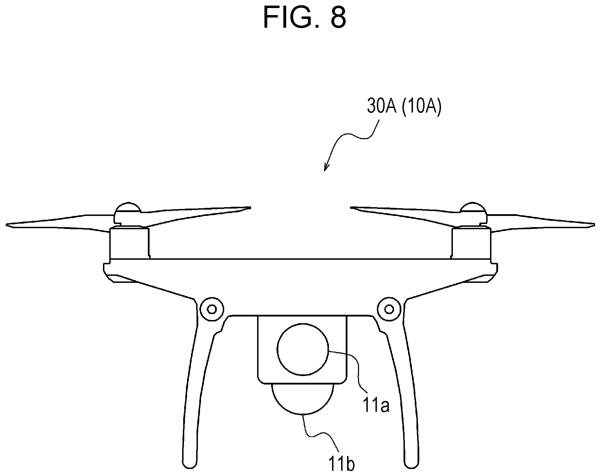

FIG. 8 is a diagram illustrating an example of a drone, which is a mobile object 30A on which the image transmission apparatus 10A is mounted. As illustrated in FIG. 8, the image transmission apparatus 10A mounted on the mobile object 30A may include the first imaging optical system 11a for capturing an image of a scene downward in a traveling direction of the mobile object 30A and the second imaging optical system 11b for capturing a scene downward 360 degrees around the mobile object 30.

As with the video adjustment section 17 illustrated in FIG. 3, the first video adjustment section 17a and the second video adjustment section 17b are configured to perform various types of adjustment on raw data regarding videos output from the first image sensor 12a and the second image sensor 12b, respectively.

The video separation section 18 outputs a video signal adjusted by the first video adjustment section 17a to the first wireless communication unit 14a as the first video signal 32. The video separation section 18 outputs a video signal adjusted by the second video adjustment section 17b to the second wireless communication unit 14b as the second video signal 33. Since, unlike in FIG. 3, the first video signal 32 is transmitted to the image processing apparatus 20 as an original digital video signal in FIG. 7, the DAC 16 is not provided. In the image transmission apparatus 10A illustrated in FIG. 7, too, the DAC 16 may be provided, and the DAC 16 may convert the first video signal 32 into an analog signal and transmit the analog signal to the image processing apparatus 20, instead. In this case, an image processing apparatus 20A, which will be described later, is provided with the same ADC 25 as that illustrated in FIG. 5.

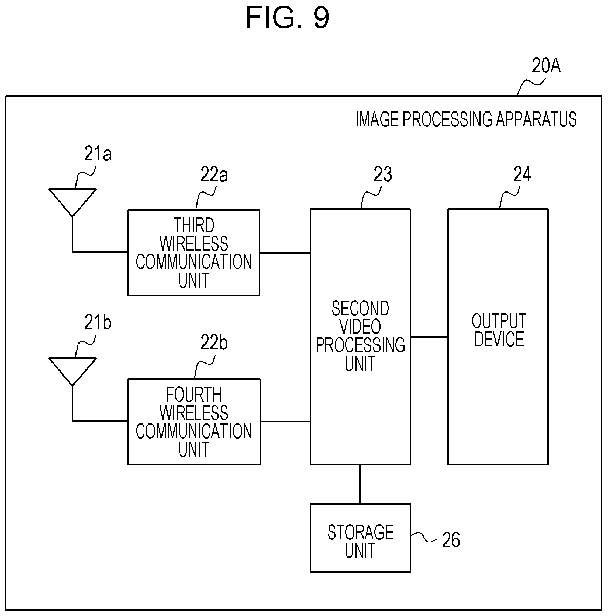

The amount of data of the second video signal 33 transmitted per unit time is larger than that of the first video signal 32. For example, the amount of data of the second video signal 33 may be twice, fifth, or tenth or more as large as that of the first video signal 32. The video separation section 18 may add timing information to the first video signal 32 and the second video signal 33. In the image transmission apparatus 10A illustrated in FIG. 7, the first video signal 32 and the second video signal 33 are both transmitted to the image processing apparatus 20A (refer to FIG. 9) as original digital signals. The timing information may be added to the first video signal 32 and the second video signal 33.

The first wireless communication unit 14a and the second wireless communication unit 14b may compress, encrypt, and transmit the first video signal 32 and the second video signal 33, respectively, which are digital signals obtained from the video separation section 18. The first wireless communication unit 14a may employ a method with which a load relating to processing and transmission of a video signal is smaller than in the second wireless communication unit 14b. For example, the first wireless communication unit 14a may employ a method in which error correction, retransmission after occurrence of an error, and the like are not performed or minimized.

The first antenna 15a and the second antenna 15b convert the first video signal 32 and the second video signal 33, respectively, into electromagnetic waves and transmit the electromagnetic waves.

In FIG. 7, the number of second imaging optical systems 11b and the number of second image sensors 12b are not limited to one. The image transmission apparatus 10A may include a plurality of pairs of the second imaging optical system 11b and the second image sensor 12b, and the video separation section 18 may combine videos output from the second image sensors 12b to generate one second video signal 33, instead.

### (Another Example of Configuration of Image Processing Apparatus)

FIG. 9 illustrates an example of the configuration of the image processing apparatus 20A corresponding to the image transmission apparatus 10A illustrated in FIG. 7. The image processing apparatus 20A has a configuration similar to that of the image processing apparatus 20 illustrated in FIG. 5, except that the third wireless communication unit 22a receives digital video signals and the ADC 25 is not included between the third wireless communication unit 22a and the second video processing unit 23. In the following description of the image processing apparatus 20A, parts different from the image processing apparatus 20 illustrated in FIG. 7 will be described, and description of the same parts is partially omitted.

The third antenna 21a and the fourth antenna 21b can receive the first video signal 32 and the second video signal 33, respectively, subjected to digital modulation. The third wireless communication unit 22a and the fourth wireless communication unit 22b may demodulate the first video signal 32 and the second video signal 33, respectively, decompress compressed video signals, and perform error processing and the like.

The amount of data of the first video signal 32 processed by the third wireless communication unit 22a is smaller than that of the second video signal 33. The third wireless communication unit 22a may, as with the first wireless communication unit 14a, employ a video compression and transmission methods with a relatively small processing load. The amount of data of the second video signal 33 processed by the fourth wireless communication unit 22b, on the other hand, is larger than that of the first video signal 32. In the fourth wireless communication unit 22b, therefore, processing such as the demodulation and decompression of a video signal, the data correction, and the error correction increases, and a longer video delays occur due to the processing time.

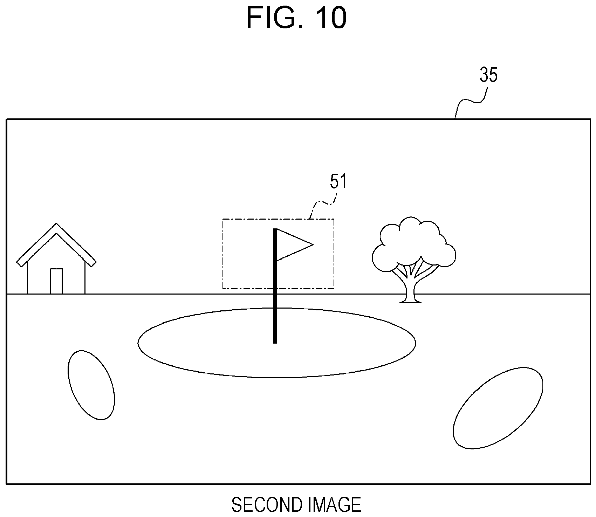

FIG. 10 illustrates an example of the second image 35 included in the second video signal 33 captured by the second imaging optical system 11b and the second image sensor 12b, with which wide-angle images can be captured. In FIG. 10, a cutout range 51 (corresponds to the third image) corresponding to the first image 34 included in the second video signal 33 is set fairly smaller than the entirety of the second image 35. For this reason, the second image 35 can constantly include the entirety of an image corresponding to the first image 34. In doing so, the fourth image need not be composited with a part of the first image 34 in order to fill a missing part of the fourth image, which is cut out of the second image 35 and then enlarged or reduced, with the first image 34. An imaging range of the second imaging optical system 11b and the second image sensor 12b may be determined in consideration of a difference in delay time between the first image 34 and the second image 35, upper-limit values of traveling speed and rotational speed of the mobile object 30, and the like.

### (Processing Performed by Image Transmission Apparatus)

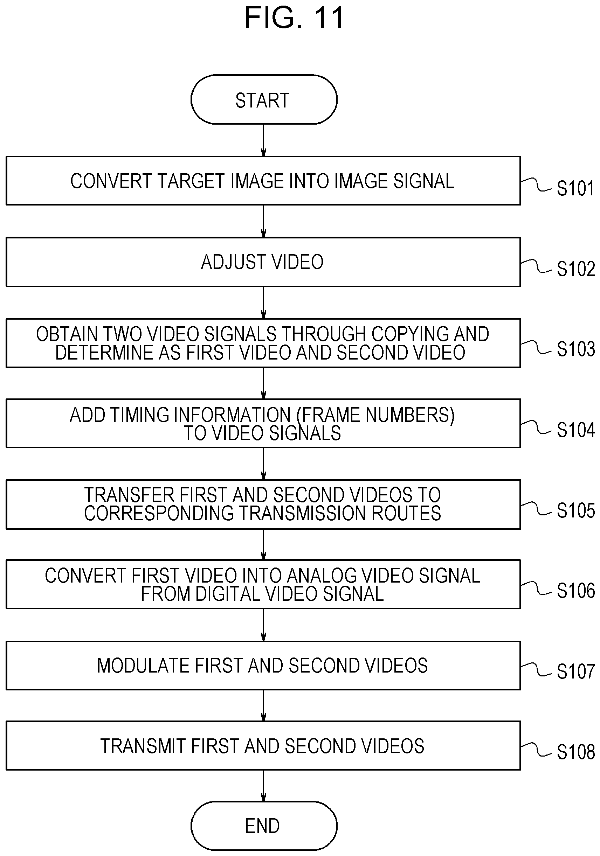

Next, a method for processing an image performed by the image processing system 1 will be described. The image transmission apparatus 10 performs a process illustrated in a flowchart of FIG. 11.

First, the image sensor 12 converts an image of the target 31 formed by the imaging optical system 11 on the light receiving surface thereof into an electrical signal (step S101).

In the first video processing unit 13, the video adjustment section 17 adjusts a video output from the image sensor 12 (step S102).

In the first video processing unit 13, the video separation section 18 copies a video signal (step S103). One of two video signals, namely the original video signal and a video signal obtained as a result of the copying, is determined as the first video signal 32, and the other as the second video signal 33. The video separation section 18 may also perform processing for decreasing the resolution of the second video signal 33.

In the case of the image transmission apparatus 10A illustrated in FIG. 7, the first imaging unit and the second imaging unit each perform steps S101 and S102. The copying of a video signal in step S 103 need not be performed. The video separation section 18 may determine video signals output from the first imaging unit and the second imaging unit as the first video signal 32 and the second video signal 33, respectively. Later steps are the same between the image transmission apparatus 10 and the image transmission apparatus 10A.

In the first video processing unit 13, the video separation section 18 adds timing information to the first video signal 32 and the second video signal 33 (step S104). The video separation section 18 can add a frame number of an image of each frame included in the first video signal 32 and the second video signal 33 to the video signal as the timing information. If the first video is converted into an analog video in the following processing, the video separation section 18 can allocate the timing information by rewriting some of pixels of the image of each frame as illustrated in FIG. 4.

The video separation section 18 transfers the first video signal 32 and the second video signal 33 to corresponding transmission routes (step S105). If the first video signal 32 is converted into an analog signal, the video separation section 18 outputs the first video signal 32 to the DAC 16. If the first video signal 32 is processed as an original digital signal, the first video signal 32 is output to the first wireless communication unit 14a. The second video signal 33 is output to the second wireless communication unit 14b.

If the first video signal 32 is converted into an analog signal, the DAC 16 converts the first video signal 32 received from the video separation section 18 into an analog signal from a digital signal (step S106). The DAC 16 outputs the first video signal 32 converted into an analog signal to the first wireless communication unit 14a. If the first video signal 32 is transmitted as an original digital signal, step S106 may be omitted.

The first wireless communication unit 14a and the second wireless communication unit 14b modulate the first video signal 32 and the second video signal 33, respectively, for wireless communication (step S107). The second wireless communication unit 14b may compress and decrypt the second video signal 33, which is a digital signal, before the modulation. The amount of data of the first video signal 32 is smaller than that of the second video signal 33. When the first video signal 32 is an analog signal, the first wireless communication unit 14a does not compress or encrypt the first video signal 32 before the modulation. Delay time caused by the first wireless communication unit 14a, therefore, is shorter than that caused by the second wireless communication unit 14b.

The first wireless communication unit 14a converts the first video signal 32 into an electromagnetic wave and transmit the electromagnetic wave using the first antenna 15a. The second wireless communication unit 14b converts the second video signal 33 into an electromagnetic wave and transmits the electromagnetic wave using the second antenna 15b (step S108).

By performing the above process, the image transmission apparatuses 10 and 10A can transmit, to the image processing apparatuses 20 and 20A, respectively, the first video, whose resolution is low but whose delay time is short, and the second video, whose resolution is high but whose delay time is longer than that of the first video, the first and second videos being captured by the mobile objects 30 and 30A, respectively.

### (Processing Performed by Image Processing Apparatus)

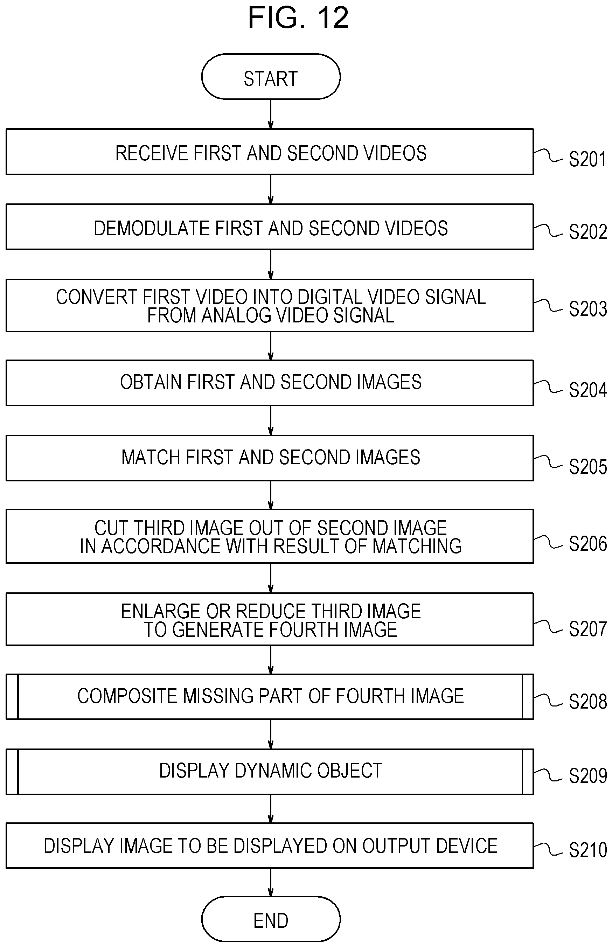

The image processing apparatuses 20 and 20A perform a process illustrated in a flowchart of FIG. 12. The process performed by the image processing apparatuses 20 and 20A will be described with reference to FIG. 12.

First, the third antenna 21a and the fourth antenna 21b receive the first video signal 32 and the second video signal 33, respectively (step S201).

The third wireless communication unit 22a and the fourth wireless communication unit 22b demodulate the first video signal 32 and the second video signal 33, respectively (step S202). The fourth wireless communication unit 22b may also perform error correction, decompression of a compressed image signal, and decryption of an encrypted image signal. The fourth wireless communication unit 22b outputs the second video signal 33 to the second video processing unit 23.

When the first video signal 32 is an analog signal, the third wireless communication unit 22a outputs the first video signal 32 to the ADC 25. The ADC 25 converts the analog first video signal 32 into a digital signal (step S203). The ADC 25 outputs the first video signal 32 converted into a digital signal to the second video processing unit 23. When the first video signal 32 is a digital signal, step S203 may be omitted. In this case, the third wireless communication unit 22a may perform error correction, decompression of a compressed image signal, and the like for the first video signal 32. The first video signal 32 is output to the second video processing unit 23.

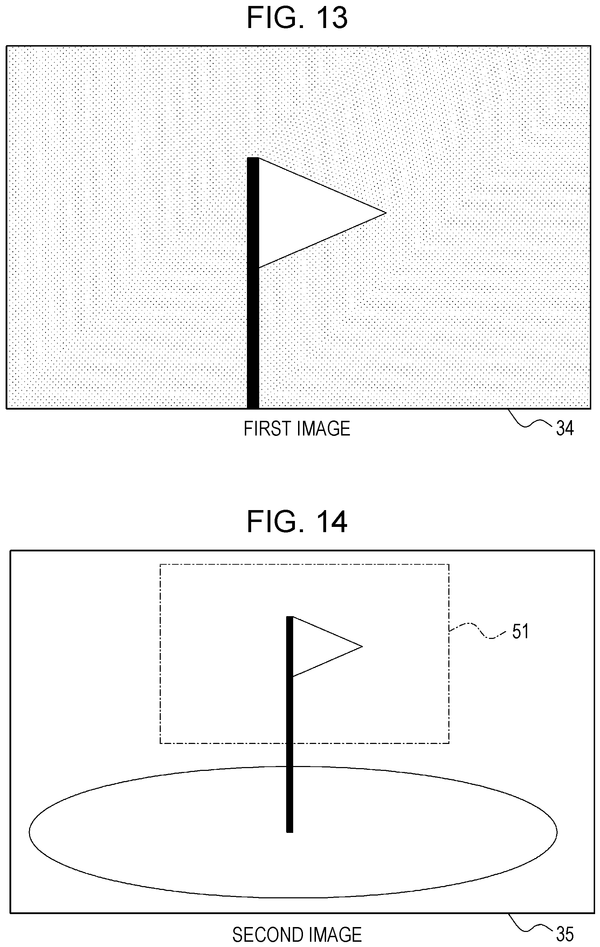

The second video processing unit 23 obtains an image of each frame included in the first video signal 32 and the second video signal 33. In an example, the second video processing unit 23 obtains a first image 34 illustrated in FIG. 13 from the first video signal 32. The second video processing unit 23 obtains a second image 35 illustrated in FIG. 14 from the second video signal 33 (step S204). The first image 34 illustrated in FIG. 13 is an image captured from a position closer to a flag included in the second image 35 illustrated in FIG. 14. That is, the first image 34 and the second image 35 are captured at different times. The resolution of the first image 34 illustrated in FIG. 13 is lower than that of the second image 35 illustrated in FIG. 14. The resolution of the second image 35 is higher than that of the first image 34. The second image 35 is an image captured at a second time t2, which precedes a first time t1, at which the first image 34 was captured.

The second video processing unit 23 matches the first image 34 and the second image 35 (step S205). The second video processing unit 23 extracts a part of the second image 35 corresponding to the first image 34. The second video processing unit 23 determines the part of the second image 35 corresponding to the first image 34 as the cutout range 51. In the example illustrated in FIG. 14, the cutout range 51 is an area defined by a dash-dot line.

The second video processing unit 23 cuts an image inside the cutout range 51 out of the second image 35 as a third image (step S206). The second video processing unit 23 then generates a fourth image by enlarging or reducing the third image cut out of the second image 35 such that the third image becomes close to an image of the target 31 captured with the imaging optical system 11 located at the point B at the first time t1 (step S207). In other words, in FIG. 2, the second video processing unit 23 enlarges or reduces the second image 35 captured from the point A at the second time t2 such that the second image 35 becomes close to an image captured at the point B at the first time t1, which is closer to the present time t0. If a distance between the imaging target and the point A is larger than a distance between the imaging target and the point B, the cutout third image can be usually made close to an image captured at the point B by enlarging the third image.

The second video processing unit 23 compares the fourth image and the first image 34 and, if the first image 34 includes a part that is not included in the fourth image, obtains, from the first image 34, an image corresponding to the part that is not included in the fourth image and composites the image with the fourth image (step S208).

If there is an image of an object moving relative to a background image in the first image 34 or the second image 35, the second video processing unit 23 determines that the object is a dynamic object. If there is a dynamic object, the second video processing unit 23 performs a process for appropriately displaying the dynamic object in the fourth image (step S209). The second video processing unit 23 determines, as necessary, an image obtained by performing steps S208 and S209 on the fourth image generated in step S207 as a fifth image, which is an image to be displayed 36.

If the first image 34 does not include a part that is not included in the fourth image, and if neither the first image 34 nor the second image 35 includes a dynamic object, steps S208 and S209 are not performed. In this case, the fourth image generated in step S207 is determined as the image to be displayed 36.

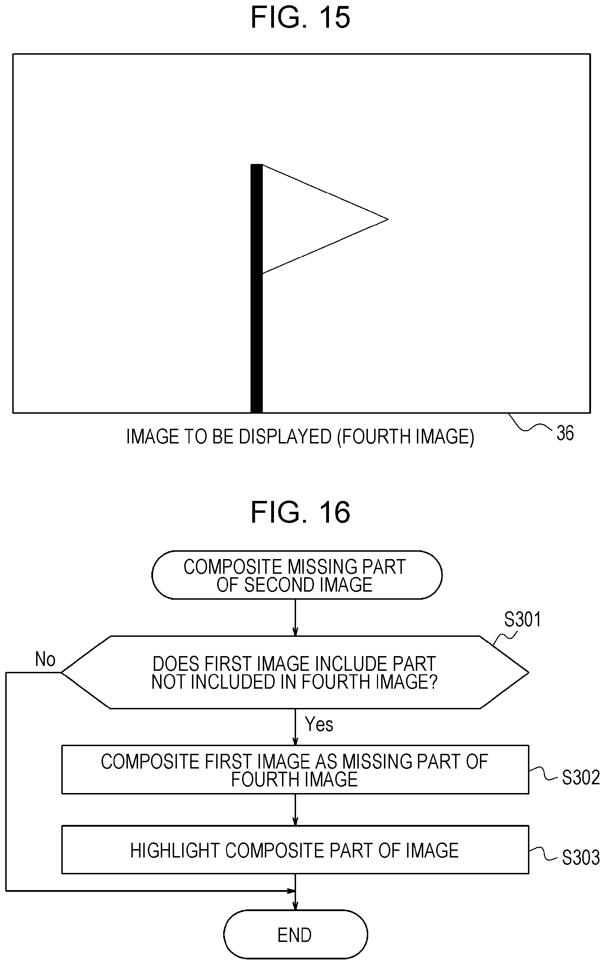

The second video processing unit 23 outputs the image to be displayed 36 to the output device 24 to display the image to be displayed 36 (step S210). FIG. 15 illustrates the image to be displayed 36 displayed on the output device 24 at a time when steps S208 and S209 have not been performed. In a simple embodiment of present disclosure, steps S208 and S209 need not be incorporated. The image to be displayed 36 is displayed as an image of higher resolution than that of the first image 34. The second video processing unit 23 performs the above-described process on sequentially obtained images of frames included in the first video and the second video. The image to be displayed 36, therefore, is displayed as a moving image.

With the image processing system 1, the image processing apparatuses 20 and 20A thus cut the second image 35, whose resolution is high but whose delay is long, on the basis of the first image 34, whose resolution is low but whose delay is short, and performs correction, such as enlargement or reduction, on the second image 35. As a result, a part of the second image 35 can be made close to an image at the present time t0 by reducing an effect of delay and displayed. In addition, in an environment where there is no missing part in relation to the first video and there is no dynamic object, the method in the present disclosure can be performed through a process with a relatively small load, namely cutting an image in a part of the second image 35 corresponding to the first image 34 and enlarging or reducing the image. The image processing system 1, therefore, can be achieved with a relatively small-scale system.

### (Example of Process When Corrected Image Includes Missing Part)

In FIGs. 13 and 14, the second image 35 includes the target 31 shown in the first image 34. The mobile object 30, however, can change a direction of movement or an orientation thereof while moving. In this case, the first image 34 can go out of the second image 35. That is, the second image 35 does not necessarily include the entirety of the first image 34. In step S208 in FIG. 12, processing taking into consideration this case is performed. The processing in step S208 will be described with reference to FIG. 16.

First, the second video processing unit 23 determines whether the first image 34 includes a part that is not included in a range shown by the fourth image (step S301).

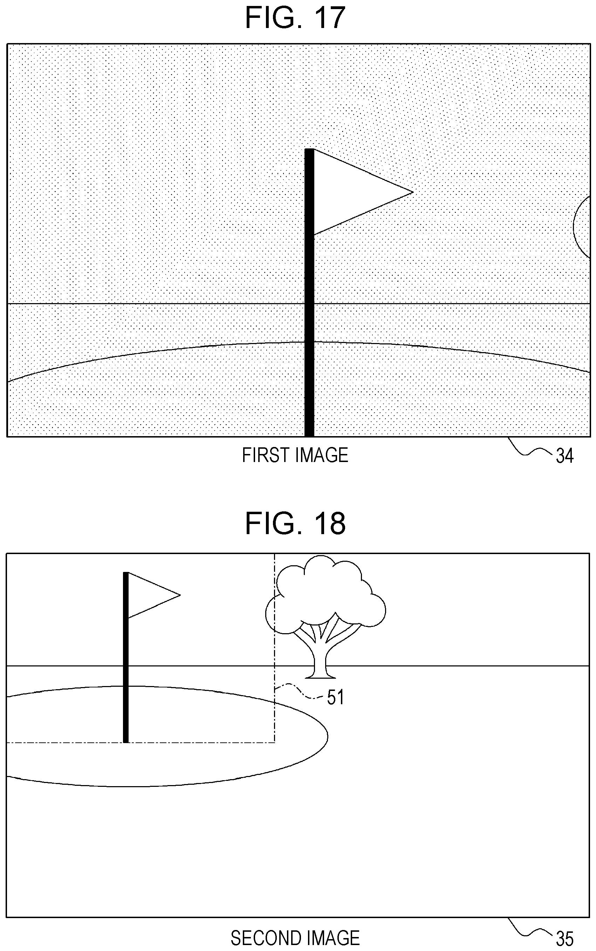

FIGs. 17 and 18 illustrate examples of the first image 34 and the second image 35, respectively. The resolution of the second image 35 is higher than that of the first image 34. The second image 35 is an image captured earlier than the first image 34 by a period of time corresponding to a difference in delay time between the first image 34 and the second image 35. The orientation of the imaging optical system 11 of the image transmission apparatus 10 or 10A can change between the second time t2, at which the second image 35 is captured, and the first time t1, at which the first image 34 is captured. As illustrated in FIG. 18, the second image 35 might not include the entirety of an imaging range of the first image 34. In the example illustrated in FIG. 18, the cutout range 51 in the second image 35 does not include areas corresponding to left and upper parts of the first image 34. In this case, the second video processing unit 23 can determine, on the basis of a result of step S205, that the first image 34 includes a part that is not included in a range shown by the fourth image (step S301: Yes). In this case, the process performed by the second video processing unit 23 proceeds to step S302.

In step S302, the second video processing unit 23 generates a fifth image by combining an image corresponding to a missing part, which has been cut out of the first image 34, with the fourth image (step S302). That is, the fifth image is an image obtained by combining together a part of the fourth image and a part of the first image.

The second video processing unit 23 may highlight, on the basis of the first image 34, the part composited with the fourth image (step S303). For example, the second video processing unit 23 may surround the part composited from the first image 34 with a thick line. The second video processing unit 23 may omit step S303. Unlike in step S303, the second video processing unit 23 may perform processing for making a part where the first image 34 and the fourth image have been composited together less conspicuous.

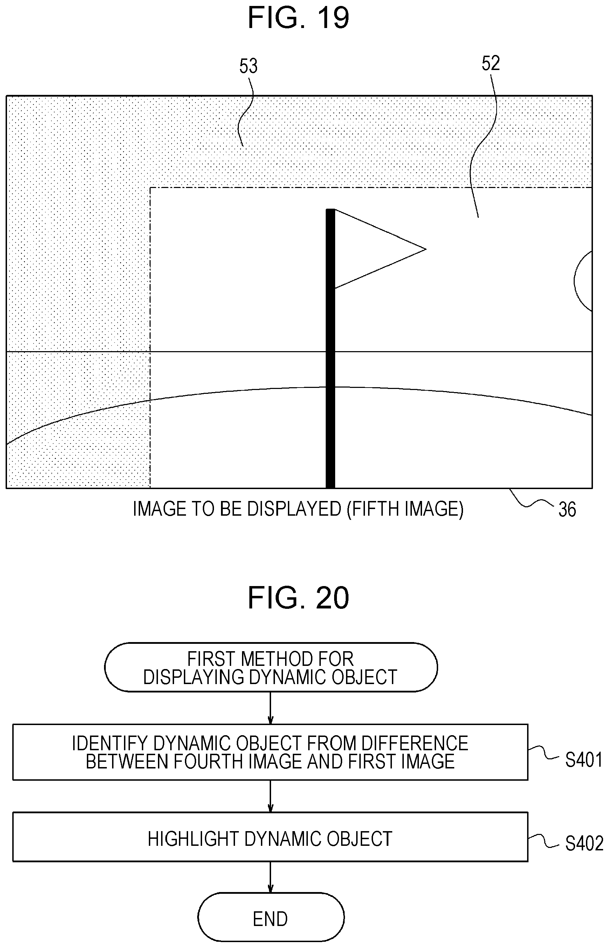

As illustrated in FIG. 19, for example, the second video processing unit 23 may obtain a fifth image, which is the image to be displayed 36, by combining a first partial image 52 of high resolution cut out of the second image 35 and enlarged with a second partial image 53 of low resolution cut out of the first image 34, instead. The first recognition section 52 corresponds to the fourth image.

If, as illustrated in FIG. 14, for example, the second image 35 includes the entirety of the first image 34 in step S301, on the other hand, the first image 34 does not include a part that is not included in the corrected image (step S301: No). As illustrated in FIG. 10, for example, if an angle of view of the second video is sufficiently larger than that of the first video, a result of step S301 is constantly No. In this case, the second video processing unit 23 does not composite a part of the first image 34 with the fourth image.

As described above, even when an orientation of the image transmission apparatus 10 or 10A changes while the image transmission apparatus 10 or 10A is capturing images, the image processing apparatus 20 or 20A can keep outputting images to be displayed 36 without losing a part of the images to be displayed 36 by compositing images cut out of the first images 34 as missing parts of the fourth images. The image processing apparatus 20 or 20A, therefore, can continuously display a video stably.

### (Displaying Dynamic Object)

An imaging range of the image transmission apparatus 10 can include a dynamic object moving relative to a background of the imaging target 31. A dynamic object moves between the second time t2, at which the second image 35 is captured, and the first time t1, at which the first image 34 is captured. A position of the dynamic object in the second image 35, therefore, is different from that of the dynamic object in the first image 34. An image obtained by enlarging or reducing a part of the second image 35, whose delay time is long, does not reflect a position of the dynamic object at the present time t0. The dynamic object, therefore, needs to be displayed in the image to be displayed 36 using a special method and a special mode. In step S209 in FIG. 12, processing in this case is performed. The processing in step S209 will be described hereinafter.

### (First Method for Displaying Dynamic Object)

FIG. 20 is a flowchart illustrating a method for displaying a dynamic object.

The second video processing unit 23 compares a first image 34 and a fourth image, which is obtained by enlarging or reducing a third image cut out of a second image 35. The second video processing unit 23 can identify a dynamic object from a difference between the first image 34 and the fourth image (step S401). If there is an image of an object located at a position in the first image 34 that does not match a position in the fourth image, the second video processing unit 23 can determine that the object is a dynamic object. For example, the second video processing unit 23 can determine an area where pixels with large differences in pixel values between the first image 34 and the fourth image are clustered together as an area where a dynamic object exists. Dynamic objects include, for example, humans, vehicles, bicycles, and animals.

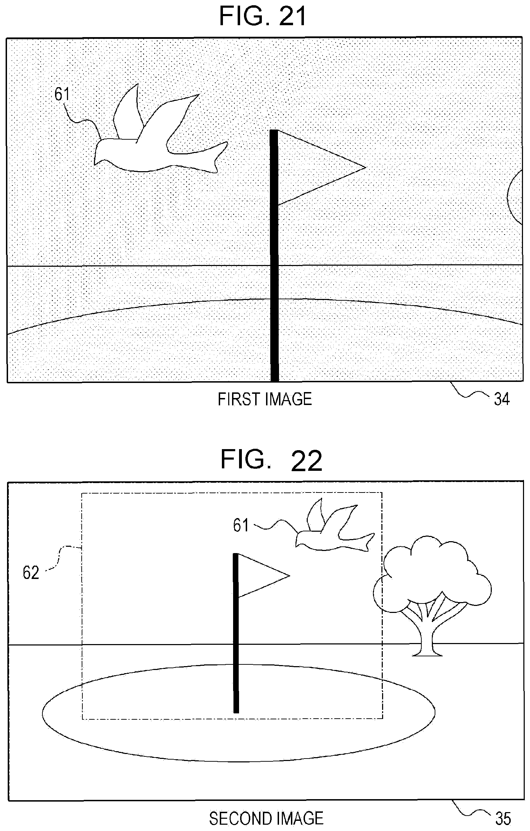

As an example, FIG. 21 illustrates a first image 34. FIG. 22 illustrates a second image 35. A position of a dynamic object 61 relative to a background of the target 31 is different between the first image 34 and an image inside a cutout range 62 in the second image 35. The second image 35 is captured earlier than the first image 34. The dynamic object 61, therefore, is not located at a position of the dynamic object 61 illustrated in FIG. 22 at the first time t1, at which the first image 34 is captured.

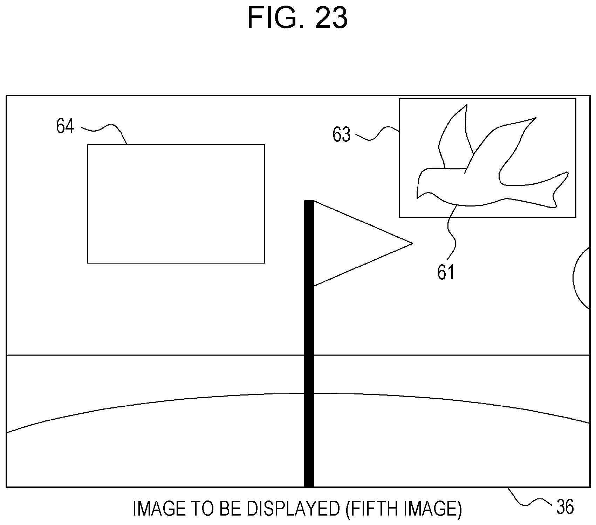

The second video processing unit 23 generates a fifth image by compositing, with the fourth image, an image element for identifying an area determined to include the dynamic object 61 (step S402). The second video processing unit 23 may composite an image element having any shape for highlighting the dynamic object 61 with the fourth image. As illustrated in FIG. 23, for example, the second video processing unit 23 may provide a frame 63 around the dynamic object 61 in the fourth image. Alternatively, the second video processing unit 23 may perform processing for highlighting an edge of an image of the dynamic object 61. The fifth image is output to the output device 24 as an image to be displayed 36. A user of the image processing system 1 can recognize, by looking at the image element for highlighting the fifth image displayed on the output device 24, that the displayed dynamic object 61 is one in the past.

The second video processing unit 23 may also provide any image element in an area in the fifth image corresponding to an area in the first image 34 determined to include the dynamic object 61. As illustrated in FIG. 23, for example, the image element may be a frame 64. The user of the image processing system 1 can recognize, by looking at the frame 64, a position of the displayed dynamic object 61 at the first time t1 closer to the present time t0.

### (Second Method for Displaying Dynamic Object)

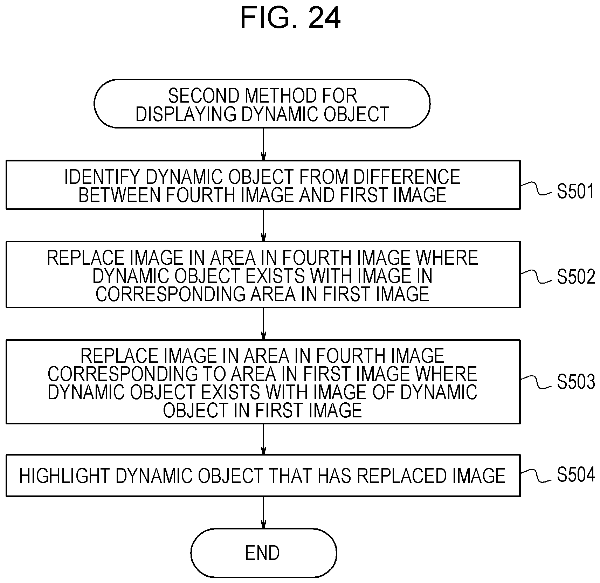

FIG. 24 is a flowchart illustrating another method for displaying a dynamic object 61. As in step S401 in FIG. 20, the second video processing unit 23 identifies an area where a dynamic object 61 exists from a difference between a fourth image, which has been cut out of the second image 35 and enlarged or reduced, and a first image 34 (step S501).

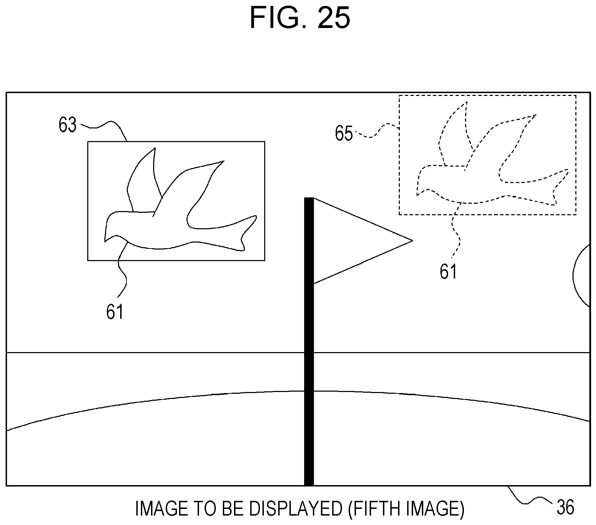

The second video processing unit 23 replaces an image in an area in the fourth image where the dynamic object 61 exists with an image in a corresponding area in the first image 34 (step S502). In an example, as illustrated in FIG. 25, an image of the dynamic object 61 is removed from an area 65 in the fourth image where the dynamic object 61 has been displayed. In FIG. 25, the removed dynamic object 61 and the area 65 where the dynamic object 61 was displayed are indicated by broken lines for the sake of description. The broken lines are not displayed in an actual image. The area 65 where the dynamic object 61 has been displayed may be replaced by an image of a background in a corresponding area obtained from the first image 34.

The second video processing unit 23 replaces an image in an area in the fourth image corresponding to an area in the first image 34 where the dynamic object 61 exists with the image in the area in the first image 34 where the dynamic object 61 exists (step S503). As a result, an image of the dynamic object 61 indicated in FIG. 25 by solid lines is added to the area in the fourth image corresponding to the area in the first image 34 where the dynamic object 61 is displayed. The fifth image is thus generated. Although resolution is low, the dynamic object 61 is displayed in the fifth image at a position closer to one in real-time.

Furthermore, the second video processing unit 23 may optionally add an image element for highlighting the dynamic object 61 replaced by the dynamic object 61 in the first image 34 (step S504). As illustrated in FIG. 25, for example, the second video processing unit 23 may display a frame 63 around the dynamic object 61 in the fifth image. As a result, the user can recognize that a dynamic object 61 in an image displayed on the output device 24 is a composite image.

### (Third Method for Displaying Dynamic Object)

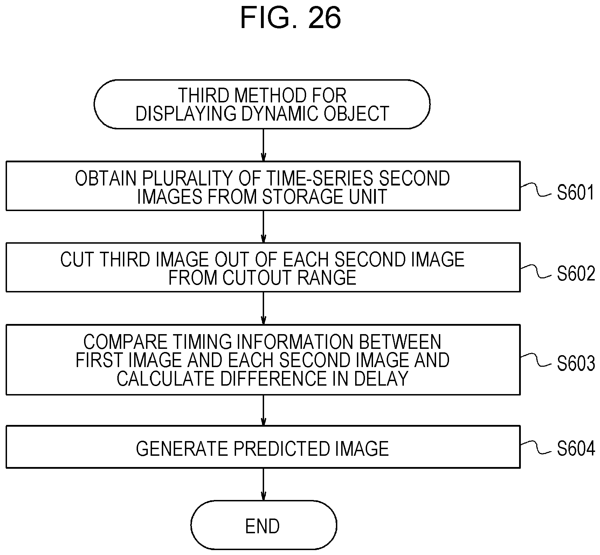

FIG. 26 is a flowchart illustrating yet another method for displaying a dynamic object 61. Before performing this display method, the second video processing unit 23 receives the second video signal 33 and sequentially stores the images of the frames included in the second video signal 33 in the storage unit 26 as second images. The storage unit 26 holds second images 35 recently captured at a plurality of times in time series. The storage unit 26 also obtains timing information added, in step S104, to the images of the frames included in the second video signal 33 and stores the timing information while associating the timing information with the second images 35.

The second video processing unit 23 obtains, from the storage unit 26, a plurality of second image 35 obtained at a plurality of last consecutive points in time (step S601).

The second video processing unit 23 cuts, on the basis of a recently obtained first image 34, a third image out of each second image 35 from a cutout range 51 corresponding to the first image 34 (step S602).

The second video processing unit 23 obtains timing information included in the first image 34 and timing information included the second images 35 stored in the storage unit 26. The second video processing unit 23 calculates, on the basis of the obtained timing information, a difference in delay time between each second image 35 and the first image 34 (step S603). In a different method, the second video processing unit 23 may obtain velocity of the mobile object 30 and estimate a difference in delay time on the basis of a change in the size of the target 31 included in each second image 35.

The second video processing unit 23 generates a predicted image on the basis of a plurality of fourth images obtained by enlarging or reducing third images cut out of the second images 35 and the differences in delay time (step S604). The second video processing unit 23 may estimate an amount of movement of images on the basis of the fourth images different from one another in terms of delay time, and then predict an image at the first time t1 or the present time t0, which is later than the second time t2. The second video processing unit 23 may calculate a video change vector from the fourth images and generate a predicted image on the basis of the differences in delay time. The second video processing unit 23 can reduce, by using the timing information added by the image transmission apparatus 10 or 10A on the basis of frame numbers, an effect of variation in delay time between the second images 35 upon an image to be displayed.

As described above, in the present embodiment, the image processing system 1 can display an image of higher resolution while reducing delay using two images, namely the first image 34, whose resolution is low but whose delay time is short, and the second image 35, whose resolution is high but whose delay time is long. That is, the image processing system 1 can achieve both high image quality and real-time performance. In addition, when the first video signal 32 is transmitted as an analog signal and the second video signal 33 is transmitted as a digital signal, the image processing system 1 can utilize advantageous features of analog transmission, namely real-time performance, and digital transmission, namely high resolution.

Furthermore, the method in the present disclosure can be achieved through process with a relatively small load, namely cutting and enlarging or reducing an image, in a static-object centered environment where an imaging range of the second video includes the first video and an imaging target does not include a dynamic object 61. Furthermore, with the configuration including the two imaging units illustrated in FIG. 7, an image cut out of the second image 35 can include an imaging range of the first image 34 by setting an angle of view of the second imaging unit sufficiently larger than that of the first imaging unit. As a result, even when an area whose image is captured by the first imaging unit of the image transmission apparatus 10A changes, an area in the second image 35 corresponding to the first image 34 can be easily cut and displayed. Consequently, the entirety of an image corresponding to the first image 34 can be stably displayed.

In addition, in the present embodiment, even when a captured image includes a dynamic object 61, the image processing system 1 can display the dynamic object 61 for the user at an appropriate position in an appropriate mode, regardless of delay time of the second image.

Although an embodiment in the present disclosure has been described on the basis of the drawings and examples, it is to be noted that those skilled in the art can easily alter or correct the embodiment in various ways on the basis of the present disclosure. It is therefore to be noted that the scope of the present disclosure includes such alterations and corrections. For example, a function or the like included in each component or step may be rearranged insofar as no logical contradiction is caused, and a plurality of components or steps may be combined together or further divided. Although the apparatus has been mainly described in the embodiment of the present disclosure, another embodiment of the present disclosure can be implemented as a method including the steps performed by the components of the apparatus. Another embodiment of the present disclosure can be implemented as a method performed by a processor included in an apparatus, a program, or a storage medium storing the program. It is to be understood that the scope of the present disclosure also includes these.

Terms such as "first" and "second" in the present disclosure are identifiers for distinguishing the components. The components distinguished with the terms such as "first" and "second" in the present disclosure may exchange the numbers thereof. For example, a first lens may exchange "first" for "second", which are identifiers, with a second lens. The identifiers are simultaneously exchanged. Even after the exchange of the identifiers, the components are still distinguished from each other. Identifiers may be removed. Components from which identifiers have been removed are distinguished from each other with reference numerals. The identifiers such as "first" and "second" in the present disclosure are not to be used as a sole basis for interpretation of order of the components or presence of an identifier with a smaller number.

### REFERENCE SIGNS

- 1: image processing system
- 10, 10A: image transmission apparatus
- 11: imaging optical system (imaging unit)
- 11a: first imaging optical system (first imaging unit)
- 11b: second imaging optical system (second imaging unit)
- 12: image sensor (imaging unit)
- 12a: first image sensor (first imaging unit)
- 12b: second image sensor (second imaging unit)
- 13: first video processing unit (second processor)
- 14a: first wireless communication unit (first transmission unit)
- 14b: second wireless communication unit (second transmission unit)
- 15a: first antenna (first transmission unit)
- 15b: second antenna (second transmission unit)
- 16: DAC
- 17: video adjustment section
- 17a: first video adjustment section
- 17b: second video adjustment section
- 18: video separation section
- 20: image processing apparatus
- 21a: third antenna (first reception unit)
- 21b: fourth antenna (second reception unit)
- 22a: third wireless communication unit (first reception unit)
- 22b: fourth wireless communication unit (second reception unit)
- 23: second video processing unit (first processor)
- 24: output device
- 25: ADC
- 26: storage unit
- 30: mobile object
- 31: target
- 32: first video signal
- 33: second video signal
- 34: first image
- 35: second image
- 36: image to be displayed
- 40: image
- 41: top row
- 51: cutout range
- 52: first partial image
- 53: second partial image
- 61: dynamic object
- 62: cutout range
- 63, 64: frame
- 65: area where a dynamic object was displayed

## Claims

1. An image processing apparatus comprising:
a first processor that obtains a first image, which is an image of a target captured at a first time, and a second image, which is an image of the target captured, through an imaging optical system, at a second time, which precedes the first time, and that generates a corrected image, which is obtained by correcting, on a basis of the first image, at least a part of the second image such that the at least a part of the second image becomes close to an image obtained when the imaging optical system is in a positional relationship with the target at the first time.

2. The image processing apparatus according to claim 1,
wherein the first image and the second image are images captured from a same mobile object.

3. The image processing apparatus according to claim 1 or 2,
wherein the first processor generates the corrected image by enlarging or reducing a part of the second image corresponding to the at least a part of the first image.

4. The image processing apparatus according to any of claims 1 to 3, further comprising:
a first reception unit that receives the first image; and
a second reception unit that receives the second image,
wherein time taken for an image of the target captured at a certain time to be received by the first processor through the first reception unit is shorter than time taken for the image to be received by the first processor through the second reception unit.

5. The image processing apparatus according to claim 4,
wherein the first reception unit employs an analog transmission method, and the second reception unit employs a digital transmission method.

6. The image processing apparatus according to any of claims 1 to 5,
wherein resolution of the second image is higher than resolution of the first image.

7. The image processing apparatus according to any of claims 1 to 6,
wherein an angle of view of the second image is wider than an angle of view of the first image.

8. The image processing apparatus according to any of claims to 1 to 7,
wherein the first processor obtains, along with each of the first image and the second image, information indicating a timing at which the first image or the second image was captured.

9. The image processing apparatus according to any of claims 1 to 8,
wherein, if the first image includes an area that is not included in the corrected image, the first processor combines together the corrected image and a part of the first image that is not included in the corrected image.

10. The image processing apparatus according to any of claims 1 to 9,
wherein, if a position of a first object image in the first image is different from a position of a second object image, which is an object image in the corrected image corresponding to the first object image, the first processor composites an image element for identifying the position of the first object image.

11. The image processing apparatus according to any of claims 1 to 9,
wherein, if a position of a first object image in the first image is different from a position of a second object image, which is an object image in the corrected image corresponding to the first object image, the first processor replaces an image in an area in the corrected image where the second object image exists with an image in an area in the first image corresponding to the first object image.

12. The image processing apparatus according to any of claims 1 to 9,
wherein the first processor sequentially obtains a plurality of second images, generates a plurality of corrected images on a basis of the first image and the plurality of second images, and predicts an image at a present time or the first time on a basis of the plurality of corrected images and information indicating timings at which the plurality of second images were captured.

13. The image processing apparatus according to any of claims 1 to 12,
wherein the first image is an image formed by the same imaging optical system that forms the second image.

14. A method for processing an image, the method comprising:
obtaining a first image, which is an image of a target captured at a first time, and a second image, which is an image of the target captured, through an imaging optical system, at a second time, which precedes the first time; and
generating a corrected image, which is obtained by correcting, on a basis of the first image, at least a part of the second image such that the at least a part of the second image becomes close to an image obtained when the imaging optical system is in a positional relationship with the target at the first time.

15. An image transmission apparatus comprising:
an imaging unit configured to be capable of sequentially capturing images of a target at a certain frame rate;
a second processor that sequentially generates a first image and a second image from the images of the target captured by the imaging unit; and
a transmission unit that transmits the first image and the second image,
wherein the first image is an image obtained by reducing resolution of the second image.

16. An image processing system comprising:
an image transmission apparatus configured to be capable of transmitting a first image, which is an image of a target captured at a first time, and a second image, which is an image of the target captured, through an imaging optical system, at a second time, which precedes the first time; and
an image processing apparatus including a reception unit that receives the first image and the second image from the image transmission apparatus and a first processor that generates a corrected image, which is obtained by correcting, on a basis of the first image, at least a part of the second image such that the at least a part of the second image becomes close to an image obtained when the imaging optical system is in a positional relationship with the target at the first time.
